Europäisches Patentamt

(19) European Patent Office   (11) Numéro de publication : **0 000 228**

Office européen des brevets   **B1**

(12)   # FASCICULE DE BREVET EUROPÉEN

(45) Date de publication du fascicule du brevet : 25.03.81

(21) Numéro de dépôt : **78200055.8**

(22) Date de dépôt : **20.06.78**

(51) Int. Cl.³ : **B 62 M 1/04, B 62 M 1/12**

(54) **Dispositif de propulsion musculaire notamment pour un véhicule.**

(30) Priorité : **29.06.77 CH 7970/77**

(43) Date de publication de la demande : **10.01.79 (Bulletin 79/01)**

(45) Mention de la délivrance du brevet : **25.03.81 Bulletin 81/12**

(84) Etats contractants désignés : **BE CH DE FR GB LU NL SE**

(56) Documents cités :
**FR - A - 564 577**
**FR - A - 907 922**
**NL - C - 40 551**
**US - A - 1368 696**
**US - A - 3 759 543**
**US - A - 3 913 945**

(73) Titulaire : **CLIPPER TRUST COMPANY REG.**
**P.O. Box 34709**
**FL-9490 Vaduz (LI)**

(72) Inventeur : **Zuppiger, Paul**
**chemin de la Combe 4**
**1249 Athenaz (Genève) (CH)**

(74) Mandataire : **Dousse, Blasco et al**
**7, route de Drize**
**CH-1227 Carouge/Genève (CH)**

Imprimerie Jouve, 17, rue du Louvre, 75001 Paris, France

Dispositif de propulsion musculaire notamment pour un véhicule

La propulsion musculaire d'un véhicule, en particulier d'un véhicule à organe d'entraînement rotatif, nécessite la transformation des mouvements alternatifs des membres, bras ou jambes du corps humain en une rotation unidirectionnelle de l'organe d'entraînement rotatif. Un des moyens de transformation les plus connus est le pédalier utilisé sur les bicyclettes, qui est simplement un système d'entraînement d'une roue par deux manivelles décalées de 180° l'une par rapport à l'autre. Le couple résultant de l'application d'une force sur ces manivelles varie en fonction de la position angulaire des manivelles par rapport à la direction de la force exercée. Le pédalier constitue bien un mécanisme de transformation de mouvements alternatifs des jambes ou des bras en mouvement rotatif continu dans la mesure où l'entraînement n'est obtenu que durant une demi-rotation de chaque manivelle consécutive à l'extension des jambes respectives. Cependant, le mouvement des jambes n'est pas un simple mouvement d'extension, du fait que les pieds suivent la rotation des pédales de sorte que les jambes exécutent un véritable mouvement de bielle. Ce mouvement convient surtout lorsque la position du corps est sensiblement verticale ou que le corps est penché vers l'avant comme sur une bicyclette. Par contre ce mouvement de bielle est moins facile à exécuter à partir d'un siège avec le corps incliné vers l'arrière. En outre, dans cette position inclinée vers l'arrière, le poids du corps ne peut pas être utilisé pour renforcer l'action musculaire.

D'autres solutions ont déjà été proposées, pour remplacer le mécanisme de pédalier par un mécanisme utilisant deux leviers oscillants, un élément de transmission souple associé à un arbre d'entraînement par l'intermédiaire d'une roue libre. De tels mécanismes doivent recourir à un organe de rappel destiné à ramener les leviers en arrière. L'actionnement des leviers en opposition de phase assure la continuité de l'entraînement. L'organe de rappel utilisé dans les mécanismes connus est constitué par un ressort fil enroulé en hélice aussi appelé ressort à boudin, dont une extrémité est fixée au bâti et l'autre à une extrémité de l'élément de transmission souple. L'inconvénient de cette solution réside dans le fait que plus on écarte le levier de sa position de repos, plus s'accroît le proportion d'énergie perdue utilisée pour tendre le ressort de rappel au détriment de celle utilisée pour entraîner le véhicule. Inversement, la force de rappel diminue au fur et à mesure que le levier se rapproche de sa position de repos. Il résulte de ce mécanisme une perte d'énergie appréciable. Il faut encore ajouter à ceci que les deux leviers d'entraînement sont cinématiquement indépendants l'un de l'autre de sorte que l'énergie accumulée dans chaque ressort l'est en pure perte. En outre, la démultiplication entre les leviers d'entraînement et l'arbre d'entraînement du véhicule est fixe, ce qui en limite notablement ses performances.

Il a par ailleurs déjà été proposé d'associer à un système de propulsion à pédale un mécanisme d'entraînement à bras. A cet effet, l'arbre du pédalier est muni d'une bielle destinée à être actionnée par un levier oscillant. Il est à noter que l'apport d'énergie supplémentaire qui peut être obtenu par ce système est faible. En outre, il présente l'inconvénient d'associer deux entraînements utilisant l'un une rotation, l'autre une oscillation et que la synchronisation des deux mouvements est physiologiquement difficile à réaliser.

Le but de la présente invention est de remédier, au moins partiellement, aux inconvénients des solutions susmentionnées.

A cet effet, cette invention a pour objet un dispositif de propulsion musculaire notamment pour un véhicule présentant au moins trois points d'appui, comprenant une paire de leviers, articulés autour d'un axe commun, deux éléments de transmission souples fixés par une de leurs extrémités respectives aux leviers respectifs à une certaine distance des points de pivotement de ces leviers et à leurs autres extrémités à des ressorts de rappel respectifs, chacun des éléments de transmission souples étant relié à l'arbre d'entraînement du véhicule par un mécanisme à roue libre. Ce dispositif est caractérisé par le fait que lesdits ressorts de rappel sont constitués par deux lames enroulées en spirale dont l'une des extrémités respectives est solidaire de la seconde extrémité de l'un desdits éléments de transmission souples, tandis que l'autre de ces extrémités est solidaire du moyeu d'une roue libre montée coaxialement audit arbre d'entraînement.

Le dessin annexé illustre, très schématiquement et à titre d'exemple, une forme d'exécution et une variante du dispositif objet de l'invention.

La figure 1 est une vue en perspective illustrant le principe de base de ce dispositif.

La figure 2 est une vue en élévation latérale d'un véhicule propulsé par ce dispositif, selon cette forme d'exécution.

La figure 3 est une vue de dessus de la figure 2.

La figure 4 est une vue en coupe selon la ligne IV-IV de la figure 2 et à plus grande échelle.

La figure 5 est une vue en coupe selon la ligne V-V de la figure 4.

La figure 6 est une vue de détail agrandie selon la ligne VI-VI de la figure 3.

La figure 7 est une vue agrandie d'un détail de la figure 2.

La figure 8 est une vue en coupe selon la ligne VIII-VIII de la figure 7.

La figure 9 est une vue en coupe agrandie selon la ligne IX-IX de la figure 2.

La figure 10 est une vue en coupe selon la ligne X-X de la figure 9.

La figure 11 est une vue en élévation partielle d'une variante de la forme d'exécution des figures 2 à 10.

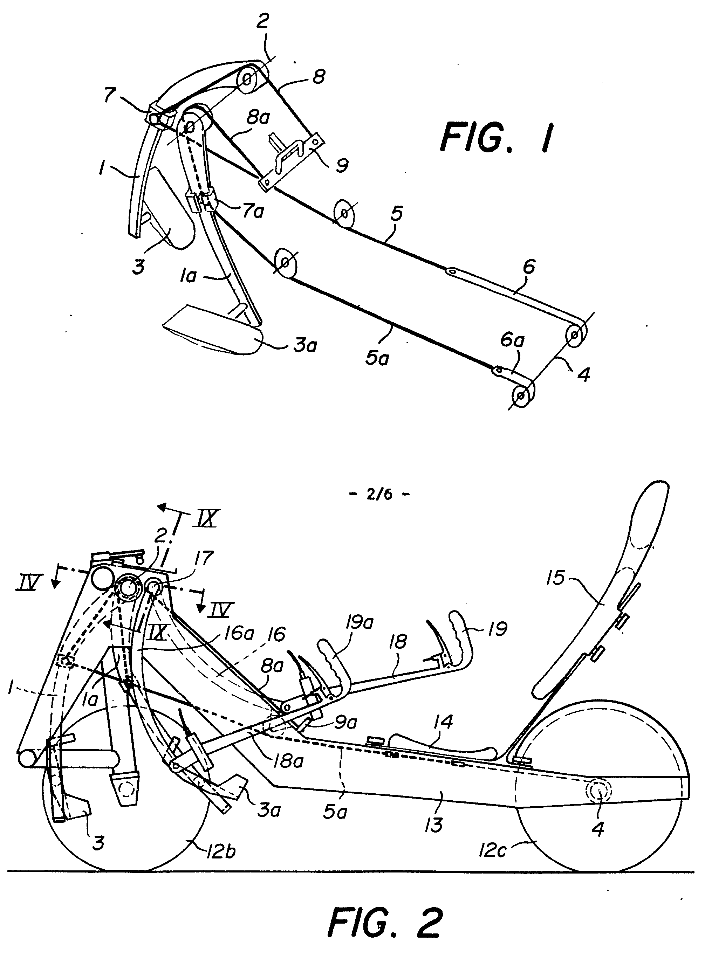

La figure 1 illustre très schématiquement le dispositif de propulsion selon l'invention qui comporte essentiellement deux leviers 1 et *1a* articulés autour d'un axe commun 2 et qui se terminent par des pédales 3, 3a. Chaque levier 1, 1a est relié à un arbre d'entraînement 4 par l'intermédiaire d'un élément de transmission souple, dans cet exemple un câble 5, 5a et d'un ressort de rappel 6, 6a. Ces ressorts sont constitués par des lames enroulées en spirale autour de l'arbre 4 en position de repos et fixées à cet arbre par une de leur extrémités, tandis que l'autre extrémité de chaque ressort est fixée à un des câbles 5, 5a. Ces câbles sont fixés aux leviers *1, 1a* par l'intermédiaire de coulisseaux respectifs 7, 7a.

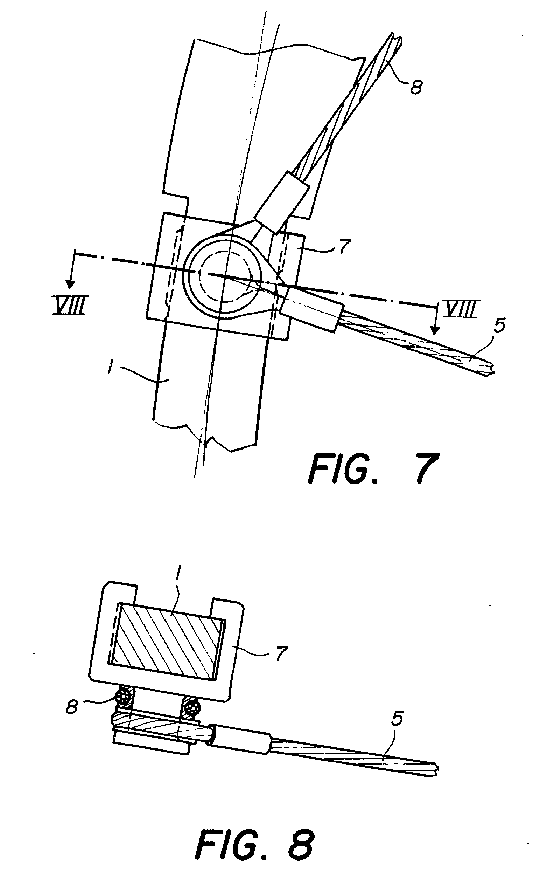

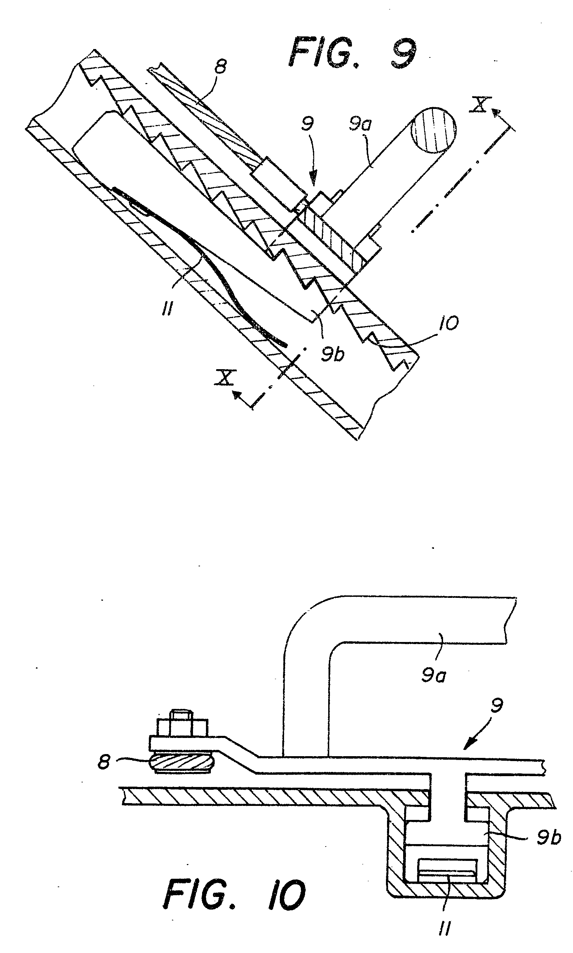

Les figures 7 et 8 illustrent le détail de la fixation du câble 5 au levier 1. On constate que le câble 5 doit constamment faire un angle α aigu avec la tangente à la courbure du levier 1 passant par le point d'ancrage du câble 5. Cet angle α aigu assure une force qui tend constamment à tirer le coulisseau 7 vers l'extrémité du levier 1. Des éléments de positionnement souples, dans cet exemple, des câbles 8, 8a retiennent les coulisseaux respectifs 7, 7a en passant autour de l'axe 2 de pivotement des leviers 1, *1a* et sont fixés au chassis du véhicule par un organe de réglage 9 illustré plus en détail par les figures 9 et 10. Comme on le constate, cet organe de réglage 9 présente une poignée de manœuvre 9a, solidaire d'un cliquet 9b en prise avec une crémaillère 10 solidaire du bâti du véhicule sous l'action d'un ressort 11. Le déplacement du cliquet 9b le long de la crémaillère 10 permet de modifier la longueur des câbles 8, 8a entre l'axe 2 des leviers 1, *1a* et leurs points d'ancrage respectifs à ces leviers. Par conséquent, les points d'ancrage des câbles 5, 5a par rapport à l'axe des leviers 1, *1a* sont réglables par ce moyen. Il en résulte que le rapport entre le déplacement angulaire des leviers et le nombre de tours de l'arbre d'entraînement 4 est variable.

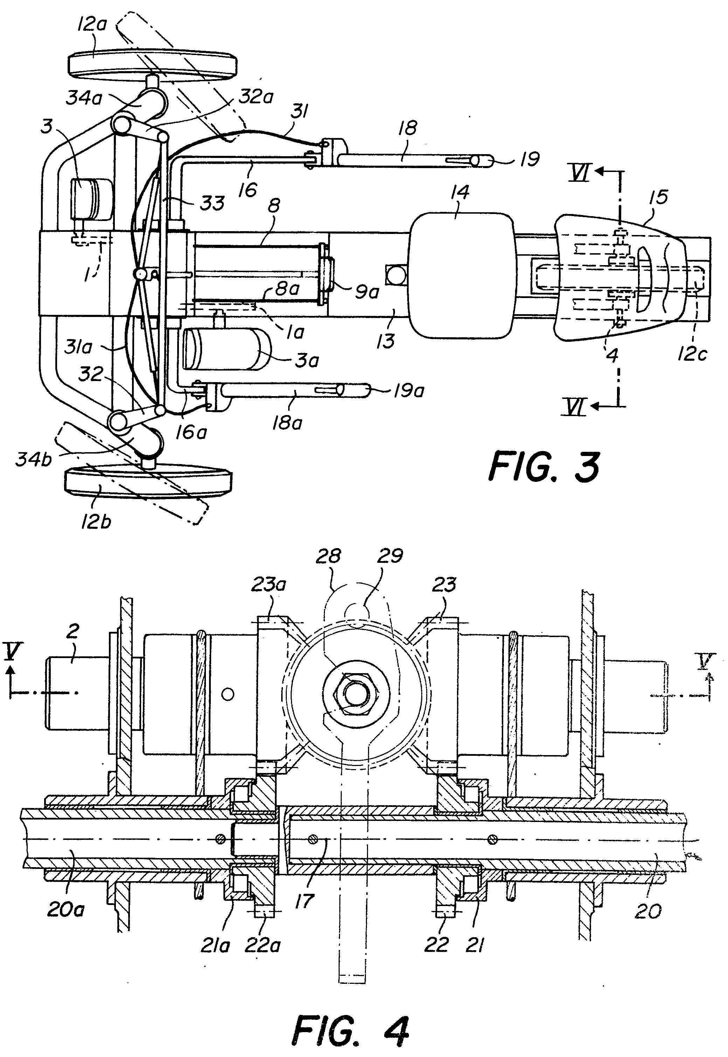

Les principes généraux du dispositif de propulsion étant décrits, nous nous reporterons maintenant plus particulièrement aux figures 2 et 3 illustrant un véhicule dont le dispositif de propulsion est basé sur le principe de celui illustré schématiquement par la figure 1.

On reconnaît sur ces figures 2 et 3 les leviers 1 et *1a,* leur axe d'articulation 2 ainsi que les pédales 3 et 3a, les éléments de transmission souples 5 et 5a et l'arbre d'entraînement 4.

On reconnaît également sur ces figures le mécanisme de changement du rapport de transmission comprenant les câbles 8 et 8a ainsi que la poignée de manœuvre 9a.

L'ensemble du dispositif de propulsion avec son mécanisme de changement du rapport de transmission est monté, dans cet exemple, sur un véhicule à trois roues 12a, 12b et 12c, dont deux se trouvent à l'avant et une à l'arrière, montées sur un chassis 13 portant un siège 14 et un dossier 15.

Dans la forme d'exécution illustrée par les figures 2 et 3, le dispositif de propulsion de la figure 1 est associé à une seconde paire de leviers 16 et 16a articulés autour d'un axe 17 parallèle à l'axe 2. Ces leviers sont articulés par ailleurs à deux tiges de commande respectives 18, 18a qui se terminent par des poignées 19, respectivement 19a.

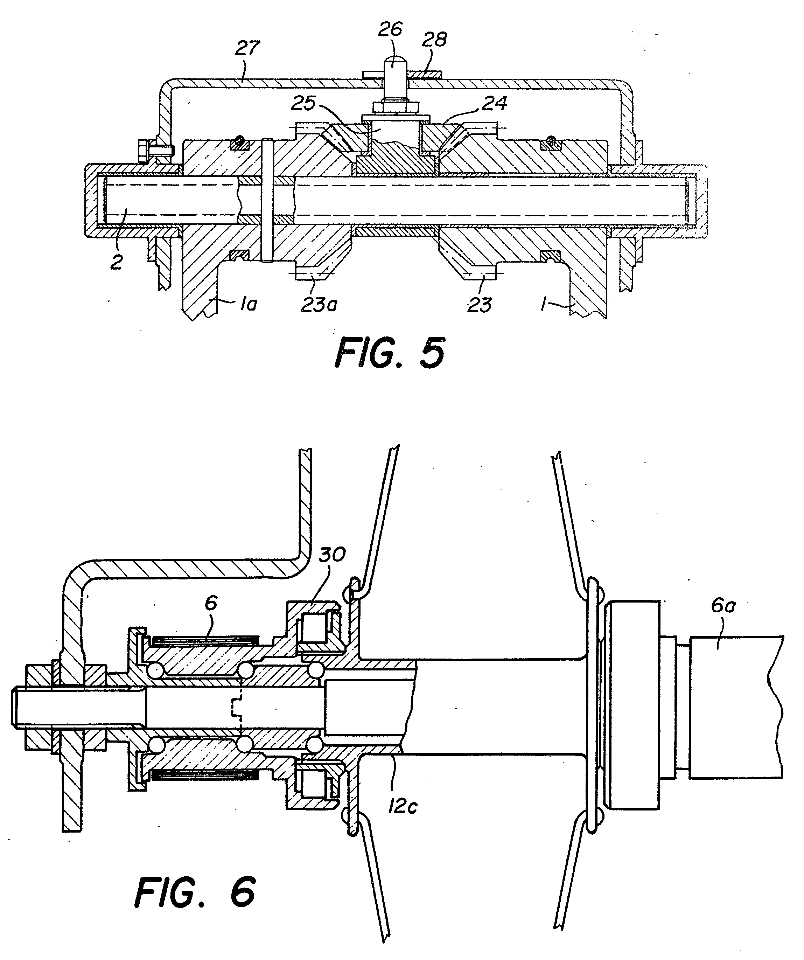

La figure 4 illustre le détail du mécanisme de liaison entre les leviers 1, *1a* d'une part, et 16, 16a d'autre part. On reconnaît sur cette figure 4 les deux axes d'articulation parallèles 2 et 17 des leviers 1, *1a* respectivement des leviers 16, 16a. Ces leviers 16 et 16a sont solidaires de deux arbres respectifs 20, 20a coaxiaux à l'axe 17 et indépendants l'un de l'autre. L'arbre 20a est solidaire d'un organe d'embrayage à roue libre 21a associé à un pignon 22a, pivoté autour de l'arbre 20a. De même l'arbre 20 est solidaire d'un organe d'embrayage à roue libre 21 associé à un pignon 22 pivoté autour de l'arbre 20. Chacun des pignons 22 et 22a est en prise avec un pignon 23 respectivement 23a coaxial à l'axe d'articulation 2 des leviers 1, *1a,* ces pignons 23, 23a étant solidaires de ces leviers respectifs. Il résulte de cette disposition que, la course motrice des leviers 1, *1a* se produisant lorsque l'utilisateur exerce une poussée avec les pieds (voir fig. 2) sur les pédales 3, 3a, l'embrayage unidirectionnel entre les pignons 22, 22a d'une part et 23, 23a d'autre part doit être choisi de manière que les pignons 22, 22a sont entraînés par les organes d'embrayage 21, 21a lorsqu'une traction des bras est exercée sur les leviers 16, 16a par l'intermédiaire des tiges 18 respectivement 18a. En effet, les pignons 22, 22a étant en prise directe avec les pignons 23 respectivement 23a, ils tournent donc en sens inverse l'un de l'autre, de sorte que les leviers 1, *1a* sont moteurs lors d'une extension des jambes, tandis que les leviers 16, 16a le sont lors d'une traction des bras. Ce mouvement correspond sensiblement à celui d'un rameur. Toutefois, deux possibilités s'offrent, dans un cas, les mouvements des membres gauches sont en phase avec ceux des membres droits, dans l'autre cas, ils sont déphasés, grâce au dispositif illustré par la figure 5.

Sur cette figure, on reconnaît l'axe d'articulation 2 des leviers 1, *1a* indépendants l'un de l'autre et leurs pignons 23, 23a dont une portion est conique. Ces deux pignons sont reliés l'un à l'autre par un pignon de renvoi conique 24 pivoté sur un support 25 monté rotativement autour de l'axe 2, l'axe de ce renvoi s'étendant radialement par rapport à l'axe 2 de pivotement des pignons 23, 23a. Le support 25 présente un tenon 26 qui s'étend à l'extérieur d'un carter 27 solidaire du bâti 13 et renfermant l'ensemble du mécanisme des figures 4 et 5. Un levier de blocage 28 articulé autour d'un pivot 29 sur le carter 27 sert à verrouiller angulairement le tenon 26, empêchant alors le support de tourner autour de l'axe 2.

Par conséquent, si le support est libre autour de l'axe 2, les leviers 1 et *1a* sont totalement indépendants l'un de l'autre et peuvent être actionnés de façon absolument quelconque.

Au contraire, lorsque le tenon 26 est verrouillé par le levier de blocage 28, les leviers 1 et *1a* ne peuvent être déplacés qu'en opposition de phase, correspondant à un mouvement alterné des jambes.

Le mécanisme d'entraînement décrit offre donc une grande flexibilité dans le choix des mouvements. C'est ainsi que la liaison à roue libre entre les leviers 1, *1a* d'une part et 16, 16a d'autre part permet d'utiliser séparément soit les jambes soit les bras, soit encore les jambes et les bras simultanément. En outre, les mouvements respectifs des membres gauches et droits peuvent être alternés en particulier si le support 25 est bloqué angulairement ou, si ce support 25 est débloqué, les mouvements des jambes et ceux des bras peuvent être en phase à l'instar des mouvements d'un rameur. C'est ce dernier cas qui permet d'obtenir l'énergie instantanée maximale, tandis que les mouvements déphasés permettent d'obtenir une production d'énergie sensiblement continue.

La figure 6 illustre le mécanisme de transmission de l'énergie des leviers 1, *1a*, 16, 16a sur la roue arrière 12c. Les ressorts 6, 6a sont fixés par une de leurs extrémités à un organe d'embrayage à roue libre, dont l'un 30 est visible en coupe sur la figure 6. Cet organe est associé au moyeu de la roue 12c, l'embrayage entre l'organe 30 et ce moyeu étant choisi de manière que l'entraînement du moyeu se produise lorsqu'une traction est exercée sur le ressort de rappel 6.

L'avantage de cette disposition réside essentiellement dans le fait qu'un ressort tel que le ressort 6 présente des propriétés voisines d'un ressort moteur de mouvement d'horlogerie, la différence essentielle résidant dans le fait qu'il travaille en sens contraire, c'est-à-dire qu'il s'arme quand on le déroule et se désarme quand on l'enroule. Cette différence provient uniquement de la forme initialement donnée à ce ressort. Or, on sait que le ressort de mouvement d'horlogerie est capable de délivrer une force sensiblement constante sur la majeure partie de sa course de désarmage. Par conséquent, la force de rappel des ressorts 6, 6a est très peu dépendante de la course des points d'ancrage des câbles 5, 5a sur les leviers 1, *1a*. Contrairement aux mécanismes utilisant des leviers à mouvement alternatif et des câbles ou des chaînes de transmission associés à des ressorts de rappel à boudins travaillant en traction, la force de rappel ne croît pratiquement pas en fonction de la longueur de la course de l'élément de transmission souple. Par conséquent, la perte d'énergie peut être considérablement réduite, notamment lorsque le rapport de transmission est élevé, c'est-à-dire lorsque l'on choisit une course des câbles 5, 5a longue, à l'aide de l'organe de réglage 9. De plus, lorsque les deux leviers 1 et *1a* sont rendus cinématiquement solidaires l'un de l'autre par le blocage du tenon 26 par le levier 28, l'énergie emmagasinée par l'armage des ressorts de rappel respectifs 6, 6a est partiellement récupérée par l'autre levier lors du désarmage de ce même ressort. En fait, si le dispositif d'entraînement était limité à l'utilisation dans laquelle les leviers 1, *1a* sont cinématiquement solidaires, les ressorts 6, 6a ne serviraient qu'à assurer l'enroulement des câbles 5, 5a lors du retour des leviers et pourraient développer une force extrêmement faible étant donné que dans ce cas la pression exercée sur un des leviers 1, *1a* ramène automatiquement l'autre levier en arrière.

Dans la version du véhicule illustrée par les figures 2 et 3, où les quatres membres peuvent coopérer à la propulsion du véhicule, il est nécessaire de prévoir un système qui permette de combiner à la fois l'entraînement et le guidage du véhicule. Un tel système n'est pas nécessaire pour comprendre l'invention et ne sera par conséquent décrit que succinctement. Il suffit d'indiquer ici que les tiges 18 et 18a peuvent être orientées autour de leurs axes longitudinaux respectifs et agir sur des câbles respectifs montés dans des gaines 31, respectivement 31a à l'instar des câbles de freins de bicyclette et qui sont fixés à des leviers 32, respectivement 32a reliés par une tringle 33 et solidaires des axes d'articulation des bras d'orientation 34a, 34b des roues 12a respectivement 12b. En agissant sur les tiges 18, 18a à l'aide des poignées 19, 19a en vue de les déplacer angulairement, ces tiges communiquent un mouvement angulaire correspondant aux leviers 32, 32a et par conséquent aux bras 34a, 34b. Bien entendu, la présence de la tringle de liaison 33 impose des déplacements angulaires identiques et de même sens aux leviers 32 et 32a, et par conséquent aux tiges de commande 18 et 18a.

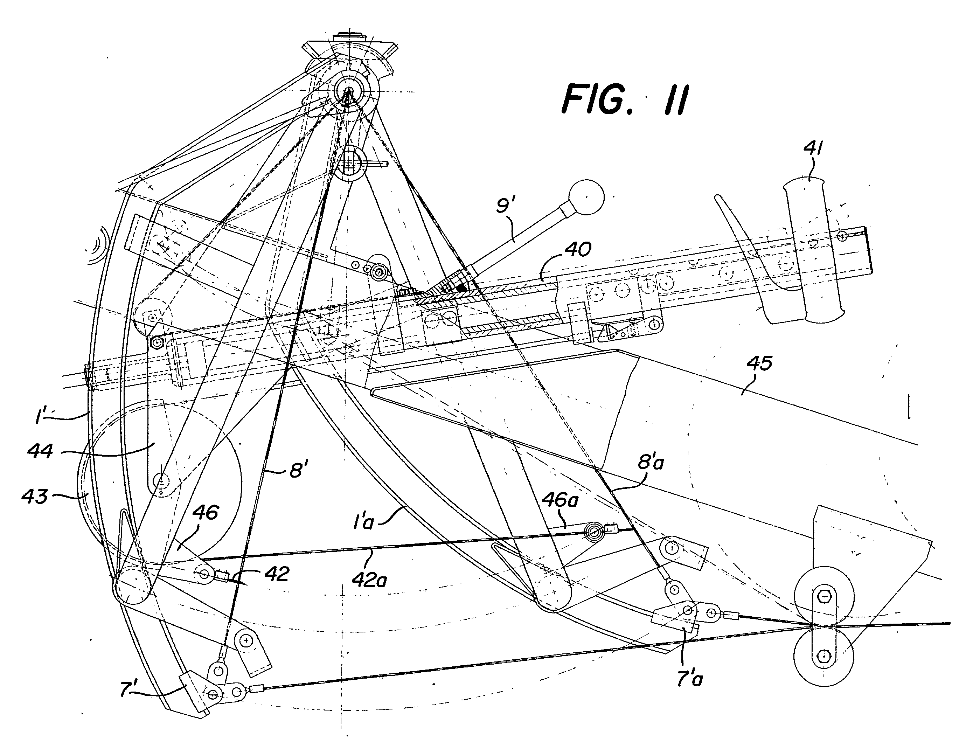

La variante de la figure 11 diffère de la forme d'exécution décrite précédemment, essentiellement en ce qui se rapporte à la liaison de l'entraînement par les bras avec les leviers d'entraînement à pédales. Cette variante vise principalement à rendre la construction plus légère.

A cet effet l'entraînement par les bras comporte un organe de guidage tubulaire 40 dans lequel deux tiges de sections semi-cylindriques sont montées coulissantes chacune étant solidaire d'une poignée latérale dont l'une 41 est visible sur la figure 11. Chaque tige logée dans l'organe de guidage 40 est reliée à l'un des leviers à pédales 1', *1'a* tout à fait semblables à ceux de la forme d'exécution précédente, par un câble 42, 42a, fixé par une extrémité à l'une des tiges, passant autour d'une double poulie 43, pivotée sur un flasque 44 solidaire du châssis 45 et fixé à l'autre extrémité de guidage à un élément d'ancrage 46, respectivement 46a, des leviers 1' respectivement 1'a.

Les câbles 8', 8'a servent, comme dans la forme d'exécution précédente, à régler la position des coulisseaux 7', 7'a le long des leviers 1', *1'a* et sont à cet effet fixés à leurs autres extrémités à un organe de réglage 9' monté coulissant le long de l'organe de guidage tubulaire.

Le mode d'entraînement du véhicule est par ailleurs complètement identique à celui de la forme d'exécution précédente et n'a donc pas besoin d'être décrit.

Ce dispositif de propulsion décrit peut être utilisé pour n'importe quel type de véhicule présentant au moins trois points d'appui. Ce dispositif est également adaptable à un instrument destiné à l'entraînement musculaire en salle. Dans ce cas, seule la roue arrière 12c est nécessaire, cette roue étant en prise avec un organe destiné à créer une certaine résistance, afin de simuler les conditions de propulsion d'un véhicule. Bien entendu dans ce cas, le véhicule peut être simplifié, notamment les roues avant et le dispositif de guidage du véhicule illustré par les figures 2 et 3 peuvent être supprimées.

## Revendications

1. Dispositif de propulsion musculaire notamment pour un véhicule présentant au moins trois points d'appui, comprenant une paire de leviers (1, 1a ; 1', 1'a) articulés autour d'un axe commun (2), deux éléments de transmission souples (5, 5a) fixés par une de leurs extrémités respectives aux leviers respectifs (1, 1a ; 1', 1'a) à une certaine distance des points de pivotement de ces leviers et à leurs autres extrémités à des ressorts de rappel respectifs (6, 6a) chacun des éléments de transmission souples (5, 5a) étant relié à un arbre d'entraînement (4) par un mécanisme à roue libre (30), caractérisé par le fait que lesdits ressorts de rappel (6, 6a) sont constitués par deux lames enroulées en spirale dont l'une des extrémités respectives est solidaire de la seconde extrémité de l'un desdits éléments de transmission souples (5, 5a), tandis que l'autre de ces extrémités est solidaire du moyeu d'une roue libre (30) montée coaxialement audit arbre d'entraînement (4).

2. Dispositif selon la revendication 1, caractérisé par le fait que chaque élément de transmission souple (5, 5a) est fixé à son levier (1, 1a ; 1', 1'a) par l'intermédiaire d'un organe (7, 7a ; 7', 7'a) monté coulissant le long de ce levier, et soumis à deux forces antagonistes, l'une exercée par l'élément de transmission souple (5, 5a), tendant à écarter cet organe de l'axe de pivotement du levier, l'autre exercée par un élément de positionnement souple (8, 8a ; 8', 8'a) prenant appui autour de l'axe de pivotement des leviers et fixé au chassis du véhicule par l'intermédiaire d'un mécanisme de réglage (9, 9') de la longueur de cet élément de positionnement souple entre ledit axe de pivotement et ledit organe coulissant.

3. Dispositif selon la revendication 1, caractérisé par le fait que lesdits leviers (1, 1a) sont solidaires de pignons respectifs (23, 23a) coaxiaux à l'axe d'articulation commun (2) de ces leviers, ces pignons étant reliés l'un à l'autre par un renvoi (24) monté pivotant sur un support (25) autour d'un axe radial par rapport audit axe d'articulation, ce support étant lui-même monté pivotant autour dudit axe d'articulation, des moyens (26, 28) étant prévus pour immobiliser ce support par rapport audit axe d'articulation (2).

4. Dispositif selon la revendication 3, caractérisé par le fait qu'il comporte une seconde paire de leviers (16, 16a) articulés autour d'un second axe (17) parallèle à celui de la première paire de leviers (1, 1a), chacun des leviers de la seconde paire étant relié à un pignon (22, 22a) coaxial à l'axe d'articulation de cette seconde paire de leviers par un organe d'embrayage à roue libre (21, 21a), chacun de ces pignons étant en prise avec un des pignons (23, 23a) solidaires de la première paire de leviers (1, 1a).

5. Dispositif selon la revendication 1, caractérisé par le fait qu'il comporte deux tiges montées coulissantes dans un organe de guidage tubulaire (40), chacune de ces tiges étant reliée à l'un desdits leviers (1', 1'a), à distance de leur axe de pivotement, par deux câbles respectifs (42, 42a) fixés par une extrémité à l'une des tiges, passant autour d'une double poulie de guidage (43) et fixés à l'autre extrémité auxdits leviers respectifs (1', 1'a).

## Ansprüche

1. Vorrichtung zum Antrieb durch Muskelkraft insbesondere für ein Fahrzeug mit mindestens drei Stützpunkten, mit einem Paar Hebeln (1, 1a ; 1', 1'a), die um eine gemeinsame Achse (2) drehbar gelagert sind, mit zwei biegsamen Uebertragungselementen (5, 5a), die mit einem ihrer entsprechenden Enden an den entsprechenden Hebeln (1, 1a ; 1', 1'a) in bestimmtem Abstand von den Drehpunkten dieser Hebel und an ihren anderen Enden an entsprechenden Rückholfedern (6, 6a) befestigt sind, wobei jedes der biegsamen Uebertragungselemente (5, 5a) über einen Freilaufmechanismus (30) mit einer Antriebswelle (4) verbunden ist, dadurch gekennzeichnet, dass die Rückholfedern (6, 6a) aus zwei in Spirale aufgerollten Blättern bestehen, wobei eines der entsprechenden Enden mit dem zweiten Ende eines der biegsamen Uebertragungselemente (5, 5a) formschlüssig verbunden ist, während das andere dieser Enden mit der Nabe eines koaxial auf der Antriebswelle (4) angebrachten Freilaufs (30) formschlüssig verbunden ist.

2. Vorrichtung nach Anspruch 1, dadurch gekennzeichnet, dass jedes biegsame Uebertragungselement (5, 5a) an seinem Hebel (1, 1a ; 1', 1'a) mit Hilfe eines Organs (7, 7a ; 7', 7'a) befestigt ist, das entlang diesem Hebel gleitend angeordnet und zwei Gegenkräften unterworfen ist, von denen die eine durch das biegsame Uebertragungselement (5, 5a) ausgeübt wird, das dazu neigt, dieses Organ von der Schwenkachse des Hebels zu entfernen, während die andere durch ein biegsames Einstellelement (8, 8a ; 8', 8'a) ausgeübt wird, das um die Schwenkachse der Hebel herum aufliegt und am Chassis des Fahrzeugs mittels eines Steuermechanismus (9, 9') für die Länge dieses biegsamen Einstellelements zwischen der Schwenkachse und dem gleitenden Organ befestigt ist.

3. Vorrichtung nach Anspruch 1, dadurch gekennzeichnet, dass die Hebel (1, 1a) mit entsprechenden Antriebsrädern (23, 23a) formschlüssig verbunden sind, die koaxial zur gemeinsamen Gelenkachse (2) dieser Hebel verlaufen, wobei diese Antriebsräder über ein Zwischengetriebe (24) miteinander verbunden sind, das drehbar auf einem Auflager (25) um eine Radialachse in bezug auf die Gelenkachse schwenkt, wobei dieses Auflager seinerseits um die Gelenkachse drehend angeordnet ist, und Mittel (26, 28) vorgesehen sind, um diese Auflager in bezug auf die Gelenkachse (2) unbeweglich zu machen.

4. Vorrichtung nach Anspruch 3, dadurch gekennzeichnet, dass sie ein zweites Hebelpaar (16, 16a) aufweist, das um eine zweite Achse (17) parallel zu derjenigen des ersten Hebelpaars (1, 1a) drehbar gelagert ist, wobei jeder der Hebel des zweiten Paars mit einem Antriebsrad (22, 22a) koaxial zur Gelenkachse dieses zweiten Hebelpaars mit Hilfe einer Freilaufkupplung (21, 21a) verbunden ist, und wobei jedes dieser Antriebsräder in Eingriff mit einem der Antriebsräder (23, 23a) steht, die mit dem ersten Hebelpaar (1, 1a) formschlüssig verbunden sind.

5. Vorrichtung nach Anspruch 1, dadurch gekennzeichnet, dass sie zwei Stangen aufweist, die gleitend in einem rohrförmigen Führungsorgan (40) angebracht sind, wobei jede dieser Stangen mit einem der Hebel (1', 1'a) in Abstand von ihrer Schwenkachse über zwei entsprechende Kabel (42, 42a) verbunden ist, die mit einem Ende an der einen der Stangen befestigt sind, welche um ein Doppelführungsrad (43) verlaufen und am anderen Ende an den entsprechenden Hebeln (1', 1'a) befestigt sind.

## Claims

1. A device propelled by muscle power in particular for a vehicle having at least three support points, comprising a pair of levers (1, 1a ; 1', 1'a) articulated about a common axis (2), two flexible transmission elements (5, 5a) fixed at one of their respective ends to the respective levers (1, 1a ; 1', 1'a) at a certain distance from the pivot points of these levers and at their other ends to respective return springs (6, 6a), each of the flexible transmission elements (5, 5a) being connected to a drive shaft (4) by means of a free wheel device (30), characterised in that the said return springs (6, 6a) are constituted by two spirally wound leaves one of the respective ends of which is rigid with the second end of one of the said flexible transmission elements (5, 5a), whilst the other of these ends is rigid with the hub of a free wheel (30) mounted coaxially to the drive shaft (4).

2. A device as claimed in claim 1, characterised in that each flexible transmission element (5, 5a) is fixed to its lever (1, 1a ; 1', 1'a) by means of a component (7, 7a ; 7', 7'a) mounted slidably along this lever, and subjected to two opposing forces, one exerted by the flexible transmission element (5, 5a) tending to move this component away from the pivot axis of the lever, the other exerted by a flexible positioning element (8, 8a ; 8', 8'a) supported about the pivot axis of the levers and fixed to the chassis of the vehicle by means of a mechanism (9, 9') for adjusting the length of this flexible positioning element between the pivoting axis and the sliding component.

3. A device as claimed in claim 1, characterised in that the said levers (1, 1a) are rigid with respective pinions (23, 23a) coaxial to the common axis of articulation (2) of these levers, these pinions being connected to one another by a reverser (24) mounted pivotably on a support (25) about an axis which is radial with respect to the axis of articulation, this support itself being mounted pivotably about the axis of articulation, means (26, 28) being provided for locking this support with respect to the axis of articulation (2).

4. A device as claimed in claim 3, characterised in that it comprises a second pair of levers (16, 16a) articulated about a second axis (17) parallel to the axis of the first pair of levers (1, 1a), each of the levers of the second pair being connected to a pinion (22, 22a) coaxial to the axis of articulation of this second pair of levers by means of a free wheel coupling device (21, 21a), each of these pinions being engaged with one of the pinions (23, 23a) rigid with the first pair of levers (1, 1a).

5. A device as claimed in claim 1, characterised in that it comprises two rods mounted slidably in a tubular guide element (40), each of these rods being connected to one of the said levers (1', 1'a) at a distance from their pivoting axis by two respective cables (42, 42a) fixed at one end to one of the rods passing about a double guide pulley (43) and fixed at the other end to the respective levers (1', 1'a).

FIG. 1

FIG. 2

FIG. 3

FIG. 4

2

**FIG. 5**

**FIG. 6**

FIG. 7

FIG. 8

FIG. 9

FIG. 10

FIG. II